Europäisches Patentamt

European Patent Office

Office européen des brevets

(19)

(11) **EP 1 056 790 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(51) Int Cl.[7]: **C08F 12/04**, C08F 36/04, C08F 4/46

(21) Anmeldenummer: **99908853.7**

(22) Anmeldetag: **05.02.1999**

(86) Internationale Anmeldenummer:
**PCT/EP99/00773**

(87) Internationale Veröffentlichungsnummer:
**WO 99/042499 (26.08.1999 Gazette 1999/34)**

(54) **VERFAHREN ZUR RETARDIERTEN ANIONISCHEN POLYMERISATION**

METHOD FOR RETARDED ANIONIC POLYMERIZATION

PROCEDE DE POLYMERISATION ANIONIQUE RETARDEE

(84) Benannte Vertragsstaaten:
**BE DE ES FR GB IT NL**

(30) Priorität: **18.02.1998 DE 19806775**

(43) Veröffentlichungstag der Anmeldung:
**06.12.2000 Patentblatt 2000/49**

(73) Patentinhaber: **BASF AKTIENGESELLSCHAFT**
**67056 Ludwigshafen (DE)**

(72) Erfinder:
 • **SCHADE, Christian**
  **D-67061 Ludwigshafen (DE)**
 • **FISCHER, Wolfgang**
  **D-69190 Walldorf (DE)**

 • **GAUSEPOHL, Hermann**
  **D-67112 Mutterstadt (DE)**
 • **KNOLL, Konrad**
  **D-67069 Ludwigshafen (DE)**
 • **WARZELHAN, Volker**
  **D-67273 Weisenheim (DE)**
 • **FONTANILLE, Michel**
  **F-33400 Talence (FR)**
 • **DEFFIEUX, Alain**
  **F-33402 Talence Cedex (FR)**
 • **DESBOIS, Philippe**
  **D-67487 Maikammer (DE)**

(56) Entgegenhaltungen:
 **US-A- 3 716 495**

**Beschreibung**

Die Erfindung betrifft ein Verfahren zur Homopolymerisation von vinylaromatischen Monomeren oder Copolymerisation von vinylaromatischen Monomeren und Dienen in Gegenwart von mindestens einem Alkalimetallorganyl oder Alkalimetallalkoholat und mindestens einem Aluminium- oder Bororganyl sowie eine Initiatorzusammensetzung zur Durchführung des Verfahrens.

Die anionische Polymerisation verläuft in der Regel sehr schnell, so daß eine Kontrolle wegen der beträchtlichen Wärmeentwicklung im technischen Maßstab schwierig wird. Erniedrigt man die Polymerisationstemperatur, so steigt die Viskosität insbesondere bei konzentrierten Lösungen zu stark an. Eine Verringerung der Initiatorkonzentration erhöht das Molekulargewicht des gebildeten Polymers. Eine Kontrolle der Reaktion durch eine entsprechende Verdünnung der Monomeren führt zu einem höheren Lösemittelbedarf und zu geringeren Raum-Zeitausbeuten.

Es wurden daher verschiedene Zusätze zu den anionischen Polymerisationsinitiatoren vorgeschlagen, die die Polymerisationsgeschwindigkeit beeinflussen.

Über den Einfluß von Lewissäuren und Lewisbasen auf die Geschwindigkeit der anionischen Polymerisation von Styrol wurde in Welch, Journal of the American Chemical Society, Vol 82 (1960), Seite 6000 - 6005 berichtet. So wurde gefunden, daß geringe Mengen von Lewis-Basen wie Ether und Amine die durch n-Butyllithium initiierte Polymerisation von Styrol bei 30°C in Benzol beschleunigen, wohingegen Lewis-Säuren wie Zink- und Aluminiumalkyle die Polymerisationsgeschwindigkeit reduzieren bzw. in überstöchiometrischen Mengen die Polymerisation zum Stillstand bringen.

Aus der US-Patentschrift 3 716 495 sind Initatorzusammensetzungen für die Polymerisation von konjugierten Dienen und Vinylaromaten bekannt, bei denen eine effektivere Nutzung des Lithiumalkyls als Initiator durch den Zusatz eines Metallalkyls eines Metalls der Gruppe 2a, 2b oder 3a des Periodensystems, wie beispielsweise Diethylzink und polare Verbindungen wie Ether oder Amine erreicht wird. Aufgrund der notwendigen hohen Lösungsmittelmengen, relativ niedrigen Temperaturen und langen Reaktionszeiten im Bereich von einigen Stunden sind die Raum-Zeit-Ausbeuten entsprechend niedrig.

Die nicht vorveröffentlichte Patentanmeldung PCT/EP97/04497 beschreibt kontinuierliche Verfahren zur anionischen Polymerisation oder Copolymerisation von Styrol- oder Dienmonomeren mit Alkalimetallalkyl als Polymerisationsauslöser in Gegenwart eines mindestens zweiwertig auftretenden Elements als Geschwindigkeitsregler.

Zur Polymerisation von konjugierten Dienen mit hoher 1,4-trans-Verknüpfung sind beispielsweise aus der EP-A 0 234 512 verschiedene Initiatormischungen bekannt, die Alkali-, Erdalkali-, Aluminium, Zink oder Seltenerdmetalle enthalten können. Die deutsche Offenlegungsschrift 26 28 380 lehrt z. B. die Verwendung von Erdalkalialuminaten als Cokatalysator zu einem lithiumorganischen Initiator zur Herstellung von Polymerisaten oder Copolymerisaten von kunjugierten Dienen mit einem hohen Gehalt an trans-1,4-Bindungen und geringen Gehalten an 1,2- oder 3,4-Bindungen. Dies soll zu einer Erhöhung der Polymerisationsgeschwindigkeit führen.

Die Verwendung von Zusätzen wie Aluminiumalkylen, die stark retardierend auf die anionische Polymerisation wirken, ist eine exakte Dosierung und Temperaturkontrolle erforderlich. Eine geringe Unterdosierung kann zu einer ungenügenden Verlangsamung der Reaktionsgeschwindigkeit, eine geringe Überdosierung aber zum Stillstand der Polymerisation führen.

Aufgabe der Erfindung war es, ein Verfahren zur Homopolymerisation von vinylaromatischen Monomeren oder Copolymerisation von vinylaromatischen Monomeren und Dienen bereitzustellen, das die vorgenannten Nachteile nicht aufweist. Insbesondere sollte eine Initiatorzusammensetzung für das Verfahren gefunden werden, die die Einstellung der Polymerisationsgeschwindigkeit in weiten Temperatur- und Konzentrationsbereichen ermöglicht.

Demgemäß wurde ein Verfahren zur Homopolymerisation von vinylaromatischen Monomeren oder Copolymerisation von vinylaromacischen Monomeren und Dienen in Gegenwart von mindestens einer Alkalimetallverbindung und mindestens einer Verbindung eines Elementes der Gruppe 3a des Periodensystems gefunden, wobei die Verbindungen, jeweils bezogen auf die Summe der Moläquivalente von Alkalimetall und Elemente der Gruppe 3a,

        a) 0,1 bis 3,9 Moläquivalente Sauerstoff, Schwefel, Stickstoff oder Phosphor und

        b) 0,1 bis 3,9 Moläquivalente eines Organylliganden enthalten.

Es ist dabei unerheblich, ob die Alkalimetallverbindung oder eine Verbindung eines Elementes der Gruppe 3a oder beide Sauerstoff, Schwefel, Stickstoff oder Phosphor bzw. einen Organylliganden enthalten. Es können daher auch Mischungen von Verbindungen, die nur Organylliganden tragen mit Verbindungen, die nur teilweise oder gar keine Organylliganden tragen und über die entsprechenden Heteroatome verfügen, verwendet werden. Die angegebenen Bereiche für die Heteroatome bzw. Organylliganden gelten in der Summe der Moläquivalente aller Alkalimetalle und Elemente der Gruppe 3a, unabhängig von dem jeweils gewählten Verhältnis von Alkalimetall zu Element der Gruppe 3a.

Unter Organylliganden werden solche Liganden verstanden, die über eine mehr oder weniger polare direkte Bindung zwischen Metall und Kohlenstoff an das Alkalimetall oder Element der Gruppe 3a des Periodensystems gebunden sind.

Bevorzugt stammen die Heteroatome aus Alkoholat-, Thiolat-, Amid-, Imid -oder Phosphide-Liganden, die an das Alkalimetall oder das Element der Gruppe 3a des Periodensystems gebunden sind. Die Heteroatome können aber auch als Brücken zwischen den Elementen, wie in Aluminoxanen oder Boroxanen vorliegen.

Bevorzugt werden als Alkalimetallverbindung ein Alkalimetallorganyl, -alkoholat, -thiolat oder -amid und als Verbindung eines Elementes der Gruppe 3a des Periodensystems ein Aluminium- oder Bororganyl verwendet.

Als Alkalimetallorganyl können die üblicherweise als anionische Polymerisationsinitiatoren eingesetzten mono-, bi- oder multifunktionellen Alkalimetallalkyle, -aryle oder -aralkyle verwendet werden. Zweckmäßigerweise werden lithiumorganische Verbindungen eingesetzt wie Ethyl-, Propyl-, Isopropyl-, n-Butyl-, sec-Butyl-, tert.-Butyl-, Phenyl-, Diphenylhexyl-, Hexamethylendi-, Butadienyl-, Isoprenyl-, Polystyryllithium oder die multifunktionellen 1,4-Dilithiobutan, 1,4-dilithio-2-buten oder 1,4-Dilithiobenzol. Die benötigte Menge an Alkalimetallorganyl richtet sich nach dem gewünschten Molekulargewicht, der Art und Menge der weiteren, eingesetzten Metallorganyle sowie der Polymerisationstemperatur. In der Regel liegt sie im Bereich von 0,0001 bis 5 Molprozent bezogen auf Gesamtmonomerenmenge.

Als Alkalimetallalkoholate können aliphatische, aromatische oder araliphatische Alkoholate von Lithium, Natrium oder Kalium einzeln oder in Mischungen verwendet werden. Beispiele hierfür sind Lithium-, Natrium- oder Kaliummethanolat, - ethanolat, -n-propanolat, -isopropanolat, -n-butanolat, -sec-butanolat, -tert-butanolat, -n-pentanolat, -isopentanolat, -hexanolat, -amylalkoholat, -3,7-dimethyl-3-octanolat, -phenolat, 2,4-di-tert-butylphenolat, 2,6-di-tertbutylphenolat, 3,5-di-tert-butylphenolat, 2,4-ditert-butyl-4-methyl-phenolat, -trimethyl-silanoat. Bevorzugt werden die Methanolate, Ethanolate, tert-butylsubstituierten Phenolate oder verzweigt Alkylalkoholate verwendet, insbesondere Lithium-tert-butylat, -amylat oder 3,7-dimethyl-3-octanolat.

Als Alkalimetallthiolate können aliphatische, aromatische oder araliphatische Thiolate von Lithium, Natrium oder Kalium einzeln oder in Mischungen verwendet werden. Beispiele hierfür sind Lithium-, Natrium- oder Kaliummethylsulfid, -ethylsulfid, -butylsulfid, -hexylsulfid, -decylsulfid, -dodecylsulfid, -stearylsulfid, -thiophenolat, -tolylsulfid, -cyclohexylsulfid oder Dilithium-1,2-dimercaptoethan. Bevorzugt werden aliphatische Thiolate mit 8-18 C-Atomen in der Alkylkette.

Als Alkalimetallamide können Lithium-, Natrium- oder Kalium-Salze von Ammoniak, primären oder sekundären Aminen mit aliphatischen, aromatischen oder araliphatischen Substituenten einzeln oder in Mischungen verwendet werden. Geeignete Amide sind z.B. Li-amid, N-Li-Methylamid, N-Li-Ethylamid, N-Li-propylamid, N-Li-butylamid, N-Li-amylamid, N-Li-phenylamid oder die entsprechenden Na- oder K-Salze; N-Li-dimethylamid, N-Li-diethylamid, N-Li-dipropylamid, N-Li-dibutylamid, N-Li-diamylamid, N-Li-(N,N-bis-trimethylsilyl)amid, N-Li-dicyclohexylamid, N-Li-N-methyl-anilid, N-Li-N-ethyl-anilid, N-Li-morpholid N-Li-diphenylamid, N-Li-piperidid oder N-Li-imidazolid. Besonders bevorzugt werden die Salze sekundärer aliphatischer Amine, ganz besonders bevorzugt N-Li-diisopropylamid.

Als Aluminium- oder Bororganyle können solche der Formel $R_3Al$ bzw. $R_3B$ verwendet werden, wobei die Reste R unabhängig voneinander Wasserstoff, Halogen, $C_1$-$C_{20}$-Alkyl oder $C_6$-$C_{20}$-Aryl bedeuten. Bevorzugte Aluminiumorganyle sind die Aluminiumtrialkyle wie Trimethylaluminium, Triethylaluminium, Tri-iso-butylaluminium, Tri-n-butylaluminium, Tri-iso-propylaluminium, Tri-n-hexylaluminium, Diethylaluminiumhydrid, Diisobutylaluminiumhydrid oder Isoprenylaluminium. Besonders bevorzugt wird Triisobutylaluminium eingesetzt. Als Aluminiumorganyle können auch solche verwendet werden, die durch teilweise oder vollständige Hydrolyse, Alkoholyse, Aminolyse, Thiolyse, Phosphinolyse oder Oxidation von Alkyl- oder Arylaluminiumverbindungen entstehen oder Alkoholate, Thiolate, Sulfide, Amide, Imide, Nitride oder Phosphide komplexiert tragen. Beispiele für solche Heterosubstituenten tragende Organoelementverbindungen sind Diethylaluminium-N,N-dibutylamid, Diethylaluminiumethoxid, Diisobutylaluminiumethoxid, Diisobutyl-(2,6-di-tert.-butyl-4-methyl-phenoxy)aluminium, Methylaluminoxan, isobutyliertes Methylaluminoxan, Isobutylaluminoxan, Tetraisobutyldialuminoxan oder Bis(diisobutyl)aluminiumoxid, Diethylbormethoxyd, Trimethylboroxin, 2-Phenyl-1,3,2-dioxaborinan usw. Weitere Beispiele sind Aluminiumalkoholate wie Aluminiumtrimethylat, Aluminiumtriethylat, Aluminiumtripropylat, Aluminiumtributylat etc. oder Borsäuretrialkylester. Bevorzugt eingesetzt werden die Aluminiumverbindungen, insbesondere solche mit Oxo -oder Alkoholategruppen. Ganz besonders bevorzugt werden Diethylaluminiumethoxyd, Diisobutylaluminiumethoxid, Methylaluminoxan, Aluminiumpropylat und Aluminiumtri-sec.-butylat.

Die molaren Verhältnisse der Metallorganyle untereinander können in weiten Grenzen variieren und richten sich vor allem nach der gewünschten Retardierungswirkung, der Polymerisationstemperatur, der Monomerzusammensetzung und -konzentration sowie dem gewünschten Molekulargewicht. Zur genauen Bestimmung des günstigsten Metallverhältnisses führt man zweckmäßig einen Vorversuch durch, wobei man den Gehalt an Aluminium- bzw. Bororganyl so wählt, daß die gewünschte Reaktionstemperatur bzw. Umsatzgeschwindigkeit nicht überschritten wird.

Zweckmäßigerweise liegt das molare Verhältnis von Alkalimetall zu Aluminium bzw. Bor im Bereich von 0,002/1 bis 100/1, bevorzugt im Bereich von 0,01/1 bis 10/1, besonders bevorzugt im Bereich von 0,3/1 bis 1,25/1.

Bei dem erfindungsgemäßen Verfahren werden hauptsächlich Alkalimetallorganyle und Aluminiumorganyle eingesetzt. Bevorzugt sind Barium-, Calcium- oder Strontiumorganyle nur in unwirksamen Mengen vorhanden, die die Polymerisationsgeschwindigkeit oder Copolymerisationsparameter nur unwesentlich beeinflussen. Auch sollen Übergangsmetalle oder Lanthanoide, insbesondere Titan oder Zirkonium nicht in wesentlichen Mengen zugegen sein.

Bei der Polymerisation ist zusätzlich ein Alkoholat, Thiolat, Amin, oder Phosphine frei oder an das Alkalimetall oder Aluminium komplexiert zugegen.

Die Alkoholate, Thiolate, Amide, Imide oder Phosphide bilden sich beispielsweise indem man der Initiatorlösung aus Alkaliorganyl, Aluminium- oder Bororganyl oder der Polymerisacionslösung einen Alkohol der Formel ROH, ein Thiol der Formel RSH, ein Amin der Formel $R_2NH$ oder $RNH_2$ oder Phosphin $PR_2H$ oder $PRH_2$ zugibt, wobei die Reste R unabhängig voneinander Wasserstoff, Halogen, $C_1$-$C_{20}$-Alkyl, $C_6$-$C_{20}$-Aryl oder $C_6$-$C_{20}$-Aralkyl bedeuten. Besonders bevorzugt sind solche mit linearen, verzweigten oder cyclischen $C_1$-$C_{12}$-Alkylresten. Beispiele hierfür sind Methanol, Ethanol, n-Propanol, iso-Propanol, n-Butanol, iso-Butanol, 2-Butanol, tert-Butanol, n-Propanol, iso-Propanol, n-Amylalkohol, n-Hexanol, n-Heptanol, n-Octanol, Cyclohexanol, Cyclopentanol, Benzylalkohol, Phenol, 1-Naphtol, 2,6-di-tert-Butylphenol, 2,4,6-tri-tert.-Butylphenol, Nonylphenol, 4-Methphenol oder die entsprechenden Thiole, Amine oder Phosphine.

Die Alkohole, Thiole, Amine oder Phosphine können auch mehrere gleiche oder verschieden funktionelle Gruppen tragen, z.B. 1,4-Dioxabutyl-, 1,5-Dioxapentyl.

Bevorzugt ist der molare Anteil der Organylliganden größer als der molare Anteil der Alkohole, Thiole, Amine oder Phosphine bezogen auf die Summe der Initiatorbestandteile. Bevorzugt wird ein molares Verhältnis von Organylliganden zur Summe aller Alkohole, Thiole, Amine und Phosphine im Bereich von 0,1 bis 100, bevorzugt 1 bis 50.

Die Alkalimetall-, Aluminium- und Bororganyle und Alkalimetallalkoholate sowie Alkohole, Thiole, Amine oder Phosphine können zusammen oder einzeln, zeitlich oder räumlich versetzt der Monomermischung zugegeben werden. Bevorzugt werden die genannten Komponenten als vorgemischte Initiatorzusammensetzung verwendet.

Zur Herstellung der Initiatorzusammensetzung können die in einem inerten Kohlenwasserstoff, wie n-Hexan, Cyclohexan oder Toluol gelösten Alkalimetallorganyle, Alkalimetallalkoholate, Aluminium- bzw. Bororganyle zusammengegeben werden. Vorzugsweise vermischt man die in den Kohlenwasserstoffen gelösten Metallorganyle homogen und läßt mindestens 2 Minuten bei einer Temperatur im Bereich von 0 bis 120°C reifen. Gegebenenfalls kann hierzu ein Lösungsvermittler, beispielsweise Diphenylethylen zugegeben werden, um das Ausfallen einer der Komponenten aus dieser Initiatorlösung zu verhindern.

Bevorzugte Initiatorzusammensetzungen enthalten ein Alkalimetallalkyl oder -aryl der Formel $M^1R^1$ oder Alkalimetallalkoholat der Formel $M^1OR^1$ und ein Aluminium- oder Bororganyl der Formel $M^2R^1_{3-m}OR^2_m$ oder Aluminoxan bzw. Boroxan der Formel $M^2O_nR^2_{3-2n}$, wobei

| | |
|---|---|
| $M^1$ | Li, Na, K |
| $M^2$ | Al, B |
| $R^1, R^2$ | unabhängig voneinander Wasserstoff, $C_1$-$C_{20}$-Alkyl, $C_6$-$C_{20}$-Aryl oder $C_6$-$C_{20}$-Aralkyl, |
| m | 0, 1, 2 oder 3, |
| n | 0 oder 1 bedeuten. |

Besonders bevorzugt werden Initatormischungen die ein Lithiumorganyl und ein Aluminiumorganyl enthalten. Als Zusätze sind bevorzugt Alkohole oder Amine. Besonders bevorzugt wird eine Initiatorzusammensetzung aus einem Litihiumalkyl und einem Dialkylaluminiumalkoholat.

Einige der erfindungsgemäßen Initiatorzusammensetzungen können aus Bestandteilen aufgebaut sein, die für sich alleine nicht polymerisationsauslösend wirken. Selbstverständlich können die Initiatorzusammensetzungen auch aus Mischungen von mehreren oder vorgenannten Komponenten aufgebaut sein.

Die Initiatorzusammensetzung eignet sich zur Polymerisation von anionisch polymerisierbaren Monomeren. Bevorzugt wird die Initiatorzusammensetzung zur Homopolymerisation oder Copolymerisation von vinylaromatischen Monomeren und Dienen eingesetzt. Bevorzugte Monomere sind Styrol, α-Methylstyrol, p-Methylstyrol, Ethylstyrol, tert.-Butylstyrol, Vinyltoluol oder 1,1-Diphenylethylen, Butadien, Isopren, 2,3-Dimethylbutadien, 1,3-Pentadien,1,3-Hexadiene oder Piperylen oder deren Mischungen. Besonders bevorzugt wird die Initiatorzusammensetzung zur Polymerisation von Styrol verwendet.

Die Polymerisation kann in Gegenwart eines Lösungsmittels vorgenommen werden. Als Lösungsmittel eignen sich die für die anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Iso-Oktan, Dekalin, Benzol, Alkylbenzole wie Toluol, Xylol, Ethylbenzol oder Cumol oder geeignete Gemische. Das Lösungsmittel sollte natürlich die verfahrenstypisch erforderliche hohe Reinheit aufweisen. Zur Abtrennung protonenaktiver Substanzen können sie beispielsweise über Aluminiumoxid oder Molekularsieb getrocknet und/oder vor Verwendung destilliert werden. Vorzugsweise wird das Lösungsmittel aus dem Verfahren nach Kondensation und der genannten Reinigung wiederverwendet.

Durch die Zusammensetzung und Menge der Metallorganyle ist es möglich die Retardierungswirkung in weiten Temperaturbereichen einzustellen. So kann auch bei anfänglichen Monomerkonzentrationen im Bereich von 50 bis 100 Volumenprozent, insbesondere von 70 bis 100 Volumenprozent polymerisiert werden, die zu hochviskosen Polymerlösungen führen und zumindest bei höheren Umsätzen höhere Temperaturen verlangen.

Nach Beendigung der Polymerisation können die lebenden Polymerketten mit einem Kettenabbruchmittel verschlossen werden. Als Kettenabbruchmittel eignen sich protonenaktive Substanzen oder Lewissäuren wie beispielsweise Wasser, Alkohole, aliphatische und aromatische Carbonsäuren sowie anorganische Säuren wie Kohlensäure oder Borsäure.

Die Zielprodukte können Homopolymerisate oder Copolymerisate sowie deren Mischungen sein. Bevorzugt werden Polystyrol sowie Styrol-Butadien-Blockcopolymerisate erhalten. Es ist auch möglich, mit dem erfindungsgemäßen Verfahren schlagzähes Polystyrol (HIPS) herzustellen, wobei als Kautschuke Polybutadien, Styrol-Butadien-Blockcopolymerisate oder Mischungen davon eingesetzt werden können.

Zur Kopplung der Blockcopolymeren könne mehrfunktionelle Verbindungen wie beispielsweise polyfunktionelle Aldehyde, Ketone, Ester, Anhydride oder Epoxide eingesetzt werden.

Das erfindungsgemäße Verfahren kann in jedem druck- und temperaturfesten Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Das erfindungsgemäße Verfahren führt je nach Wahl der Initiatorkonzentration und -Zusammensetzung, des speziell angewandten Verfahrensablaufs und anderer Parameter, wie Temperatur und evtl. Temperaturverlauf zu Polymerisaten mit hohem oder niedrigem Molgewicht. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Das Verfahren kann diskontinuierlich (absatzweise) betrieben werden. Bevorzugt wird es jedoch kontinuierlich und insbesondere bei hoher Temperatur betrieben, wofür sich verschiedene Verfahren eignen, die beispielsweise in der unveröffentlichten Patentanmeldung PCT/EP97/04497 näher beschrieben werden.

In einer bevorzugten Ausführungsform wird die Polymerisation kontinuierlich unter nicht-isothermen Bedingungen und ohne Rückvermischung - vorzugsweise in einem Rohr- oder Rohrbündelreaktor - bis zum vollständigen Umsatz durchführt, wobei die Temperatur am Reaktorausgang im allgemeinen 300°C nicht überschreitet. Der Temperaturverlauf über die Umsatzstrecke hinweg ist naturgemäß von der Geometrie dieser Strecke abhängig. Man führt zweckmäßig einen Vorversuch durch und richtet es durch Wahl der Menge und Zusammensetzung der Initiatormischung so ein, daß am Reaktorausgang bzw. nach Erreichen vollständigen Umsatzes die gewünschte Temperatur erreicht wird. Damit kann ein praktisch vollständiger Umsatz in günstiger Zeit erreicht werden. Die Verweilzeit beträgt z.B. 0,1 bis 1,5 Stunden. Bevorzugt ist eine Verweilzeit von nicht mehr als 1,2 Stunden.

Eine erfindungsgemäß ebenfalls vorteilhafte Ausführungsform mit speziellen Möglichkeiten der Produktgestaltung besteht in der Umsetzung in einem rückvermischenden Reaktor, wobei man das Initiatorgemisch oder einzelne Bestandteile gemeinsam mit oder getrennt von den Monomeren ständig frisch zuführt.

Ein besonderer Vorteil der kontinuierlich betriebenen Polymerisation in einem rückvermischenden Reaktor ist die erzielte breitere Molekulargewichtsverteilung, die für die Ausgewogenheit vieler Eigenschaften des Produkts häufig erwünscht ist.

Als rückvermischenden Reaktor verwendet man z.B. einen kontinuierlich betriebenen Rührkessel (CSTR) oder einen Umlaufreaktor.

Zweckmäßigerweise werden stationäre Bedingungen dadurch sichergestellt, daß man die Umsetzung unter isothermen Bedingungen vornimmt.

Die erfindungsgemäße Ausführungsform des Verfahrens in einem rückvermischenden Reaktionsraum findet im allgemeinen in Rührkesseln oder Schlaufenreaktoren statt, also Reaktionsräumen, in denen die Rückvermischung durch einen ungeordnet oder geordnet im Kreis geführten Produktstrom stattfindet, dem ständig frisches Reaktionsgut zugeführt und mehr oder weniger umgesetztes Reaktionsgut entnommen wird. Es kann auch eine Kombination mehrerer rückvermischender Einheiten benutzt werden, beispielsweise eine Rührkesselkaskade. Zweckmäßigerweise sind die Reaktoren soweit druckfest ausgeführt, als sie den Dampfdruck der Reaktionsteilnehmer und Hilfsstoffe aufnehmen müssen. Eine besondere Förderung der Umsetzung durch Druck findet dagegen nicht statt. Geeignet sind Reaktoren mit den üblichen Fördereinrichtungen, d.h. Rührern bzw. Propellern, um die Flüssigkeit in Bewegung zu halten und sie sind entweder mit Einbauten versehen, die fest angeordnet (statisch) oder beweglich sein können oder besitzen keine Einbauten.

Zweckmäßigerweise wird in rückvermischenden Reaktoren die Reaktionstemperatur während der Umsetzung konstant gehalten und bei Styrolmonomeren 300, bevorzugt 250°C, besonders bevorzugt 200°C nicht überschritten. Bei Verwendung von Dienmonomeren nimmt man die Umsetzung zweckmäßigerweise bei maximal 150°C vor. Bei Wahl einer Rührkesselkaskade oder gleichwirkenden anderen Vorrichtungen kann natürlich die Temperatur in den aufeinanderfolgenden Reaktionsräumen unterschiedlich sein und z.B. ansteigen.

Der Umsatz im kontinuierlich betriebenen ideal rückvermischenden Reaktor kann - theoretisch -nicht vollständig sein. Es ist aber z.B. bei einem Umlaufreaktor durch geeignete Wahl der Verfahrensparameter wie z. B. dem Kreislaufverhältnis, der Reaktionstemperatur oder der Verweilzeit möglich, einen nahezu quantitativen Umsatz zu erreichen; vorteilhaft ist ein Umsatz von bis zu 95 %, bevorzugt bis zu 90 %, besonders bevorzugt bis zu 80 %.

Eine weitere mögliche Verfahrensvariante ergibt sich dadurch, daß das erfindungsgemäße Verfahren in mindestens zwei Reaktionszonen durchgeführt wird.

Eine erste Reaktionszone dient zur Vorpolymerisation und ist als rückvermischende Einheit ausgebildet, die einen Wärmetauscher aufweist. Sie kann als Rührkessel oder auch als Umlaufreaktor mit oder ohne statischen Mischern ausgeführt und gegebenenfalls unterteilt sein, z.B. in Form einer Rührkesselkaskade. Ein hydraulisch betriebener - d.h. vollständig mit Flüssigkeit befüllter - Umlaufreaktor kann insbesondere bei höherer Viskosität des Reaktorinhalts vorteilhaft sein. Der gewünschte Umsatz richtet sich nach der beherrschbaren Viskosität der Reaktionsmasse und wird im allgemeinen möglichst hoch gewählt, sodaß die Verweilzeit bis zum vollständigen Umsatz in der anschließenden zweiten Reaktionszone möglichst kurz und die maximale Temperatur möglichst gering ist, damit keine nennenswerte Schädigung oder Depolymerisation auftritt. Zweckmäßigerweise wird in dieser ersten Reaktionszone bis zu einem Umsatz von 20 bis 80, vorzugsweise von 40 bis 60 Gew.-% durchgeführt. Die Polymerisationstemperatur in der ersten Reaktionszone beträgt 20 bis 150°C, vorzugsweise 40 bis 120°C und ganz besonders bevorzugt 60 bis 100°C.

Die Verweilzeit in der ersten Reaktionszone beträgt z.B. 0,05 bis 5 Stunden. Bevorzugt ist eine Verweilzeit von wenigstens 0,3 Stunden. Die Polymerisationswärme kann bei Verwendung von Rührkesseln z.B. über Siedekühlung und bei Umlaufreaktoren über die Wand abgeführt werden.

Das Reaktionsgemisch kann an einer einzigen Stelle zugeführt werden; es ist aber auch möglich, einen Teil der Monomere oder Teile oder Bestandteile des Initiators an einer weiteren, z.B. stromab liegenden Stelle einzuspeisen. Auf diese Weise läßt sich z.B. eine multimodale Molekulargewichtsverteilung erreichen.

Die zweite Reaktionszone dient der Vervollständigung der Umsetzung. Hierfür kann jeder druck- und temperaturfeste, im wesentlichen rückvermischungsfreie Reaktor verwendet werden. Geeignet sind vor allem Rohrreaktoren oder Rohrbündelreaktoren mit oder ohne Einbauten. Einbauten können statische oder bewegliche Einbauten sein. Ebenso können Ringscheiben- oder Turmreaktoren verwendet werden.

Der Temperaturverlauf in der zweiten Reaktionszone über die Rohrstrecke hinweg ist naturgemäß von der Geometrie dieser Strecke und dem erreichten Umsatz in der ersten Reaktionszone abhängig. Man führt zweckmäßig einen Vorversuch durch und richtet es so ein, daß am Reaktorausgang der zweiten Reaktionszone, d.h. nach Erreichen vollständigen Umsatzes eine Temperatur von 150 bis 250°C erreicht, jedoch eine Temperatur von 300°C nicht überschritten wird. Damit wird ein vollständiger Umsatz in günstiger Zeit erreicht. Vollständiger Umsatz bedeutet praktisch, daß nicht mehr als 100 ppm Restmonomer verbleiben. Wenn eine vorhandene Entgasungsvorrichtung weiter benützt werden soll, kann aber auch ein Umsatz von weniger als 99 %, z.B. 95 bis 98 % ausreichend sein. In diesem Fall können die Restmonomerengehalte auch mehr als 100 ppm betragen.

Der Temperaturverlauf in der zweiten Reaktionszone kann durch externe Temperierung beliebig modifiziert werden. Beispielsweise kann in der zweiten Reaktionszone adiabatisch, isoperibol (mit konstantem Wärmefluß) oder isotherm gearbeitet werden. Durch Kühlen oder Heizen einzelner Reaktorabschnitte der zweiten Reaktionszone kann ein der Reaktorgeometrie oder den gewünschten Produkteigenschaften angepaßtes Temperaturprofil eingestellt werden. Vorteilhaft läßt man durch adiabatischen Verlauf, d.h. dadurch, daß man weder heizt noch kühlt, die Temperatur in der zweiten Reaktionszone zum Ende hin ansteigen. Dies wirkt einem übermäßigen Viskositätsanstieg mit zunehmendem Umsatz entgegen und ermöglicht somit nahezu vollständigen Umsatz zu Produkten mit niedrigem Restmonomeren- und Oligomerengehalt. Dies ist insbesondere von Bedeutung, wenn man weitere Operationen vermeiden, d.h. das erhaltene Produkt - gegebenenfalls nach Zerstörung der lebenden Kettenenden - unmittelbar konfektionieren möchte.

In einer besonderen Ausführungsform des Verfahrens besteht die zweite Reaktionszone aus einem ein- oder mehrteiligen Rohrreaktor ohne Wärmetauscher. Gegebenenfalls können mehrere hintereinander geschaltete Rohrreaktoren verwendet werden.

Besonders bevorzugt wird bis zum vollständigen Umsatz in einem Rohrreaktor ohne Wärmetauscher polymerisiert, wobei die Polymerisation in der ersten Reaktionszone bis zu einem Umsatz von mindestens 40 % geführt wird.

Die Verweilzeit in der zweiten Reaktionszone beträgt z.B. 0,05 bis 1 Stunde. Bevorzugt ist eine Verweilzeit von nicht mehr als 0,3 Stunden. Die Umsetzung wird gewöhnlich bei einem ausreichenden Druck von bis zu 10, eventuell auch bis zu 100 bar durchgeführt.

Mit der erfindungsgemäßen Initatorzusammensetzung läßt sich die Reaktionsgeschwindigkeit ohne Nachteile für die Polymereigenschaften gegenüber der anionischen Polymerisation mit einem Alkaliorganyl deutlich absenken bzw. die Temperatur erhöhen; dadurch wird es einerseits möglich, die Entwicklung der Polymerisationswärme über einen längeren Zeitraum zu verteilen und damit in einem kontinuierlichen Verfahren den zeitlichen bzw. - z.B. bei einem Rohrreaktor örtlichen - Temperaturverlauf einzustellen. Z.B. kann dafür gesorgt werden, daß bei anfänglich hoher Monomerkonzentration noch keine hohe Temperatur auftritt, andererseits ist bei der schließlich, d.h. bei einem weiter fortgeschrittenen Umsatz auftretenden hohen Temperatur eine ungestörte Polymerisation bei gleichzeitig hoher Raumzeitausbeute möglich. Bei diesem Verfahren treten Wandbeläge nicht mehr auf.

Beispiele

Beispiel 1

In einem 1 1 -Rührkessel wurde unter Stickstoff und Rühren eine Mischung aus 125 g Styrol und 500 g Cyclohexan bei 60°C mit 10 ml einer Initiatormischung versetzt. Die Initiatormischung wurde entsprechend der in Tabelle 1 angegebenen Komponenten und molaren Verhältnissen Li/Al aus einer s-Butyllithiumlösung (1,6 M in Hexan, s-BuLi), Triisobutylaluminiumlösung (1,6 M in Hexan, TIBA) bzw. Methylaluminoxan (10% in Toluol, MAO) oder Lithium-n-pentanolat (hergestellt aus einer 1,6 M s-Butyllithiumlösung in Hexan durch Zugabe der stöchiometrischen Menge n-Pentanol) mit einem Gehalt von insgesamt 2,5 mmol, bezogen auf die Gesamtmenge an Metallatomen, hergestellt: und mit Cyclohexan auf 10 ml verdünnt. Der Reaktionsfortschritt wurde verfolgt, indem Proben genommen wurden. Nach einiger Zeit wurde die Reaktion durch Zugabe von 2 ml Ethanol abgebrochen und die erhaltene Lösung untersucht (Tabelle 1):

Tabelle 1

| Versuch | Initiator-mischung | Li/Al (molares Verhältnis) | Mw [g/mol] | Mw/Mn | Reaktions-dauer [h] | Umsatz [%] |
|---|---|---|---|---|---|---|
| 1a | TIBA, Li-n-Pentanolat | 2/1 | 33870 | 1,2 | 6 | 88 |
| 1b | s-BuLi, MAO | 1/0,9 | 46300 | 1,3 | 2,4 | 27 |
| 1 c (Vergleich) | s-BuLi | | Durchgehverhalten; Sieden des Cyclohexans | | | |

Beispiel 2:

20 g Styrol und die in Tabelle 2 - 5 angegebenen Initiatorkomponenten wurden bei -70°C in eine Glasampulle unter Schutzgas abgefüllt und unter Vakuum abgeschmolzen. Die Ampullen wurden auf Raumtemperatur gebracht, homogen vermischt und unmittelbar in ein Wärmebad der angegebenen Temperatur getaucht. Nach der angegebenen Zeit war jeweils vollständiger Umsatz erreicht; ein Durchgehverhalten wurde in keiner der Ampullen beobachtet.

Die Ergebnisse sind in den Tabellen 2 - 5 zusammengefaßt.

Tab. 2:

| Initiatormischung aus Diethylaluminiumethoxyd/s-BuLi | | | |
|---|---|---|---|
| | Beispiel 2a | Beispiel 2b | Beispiel 2c |
| $Et_2Al$-OEt [mhm] * | 5 | 7,5 | 10 |
| s-BuLi [mhm] * | 5 | 5 | 5 |
| Temp. [°C] | 75 | 90 | 150 |
| Zeit [h] | 1 | 1 | 1 |
| $M_N$ [g/mol] | 19.060 | 21.100 | 20.050 |
| $M_W/M_N$ | 1,16 | 1,11 | 1,08 |

\* mhm = mmol pro 100 g Styrol

Tab. 3:

| Initiatormischung aus Triisobutylaluminium (TIBA), Triisobutoxyaluminium und s-BuLi | | | | |
|---|---|---|---|---|
| | Beispiel 2d | Beispiel 2e | Beispiel 2f | Beispiel 2g |
| TIBA [mhm] * | 4 | 5 | 3 | 6 |

\* mhm = mmol pro 100 g Styrol

7

Tab. 3:   (fortgesetzt)

| Initiatormischung aus Triisobutylaluminium (TIBA), Triisobutoxyaluminium und s-BuLi | | | | |
|---|---|---|---|---|
| | Beispiel 2d | Beispiel 2e | Beispiel 2f | Beispiel 2g |
| (sBuO)$_3$Al [mhm] | 6 | 5 | 7 | 2 |
| s-BuLi [mhm] * | 5 | 5 | 5 | 5 |
| Temp. [°C] | 120 | 120 | 120 | 120 |
| Zeit [h] | 1 | 0,5 | 0,3 | 1 |
| M$_N$ [g/mol] | 19.200 | 19.800 | 20.500 | 18.700 |
| M$_W$/M$_N$ | 1,17 | 1,21 | 1,17 | 1,24 |

* mhm = mmol pro 100 g Styrol

Tab. 4:

| Initiatormischungen mit verschiedenen Alkylaluminiumverbindungen | | | | | | |
|---|---|---|---|---|---|---|
| Versuch | Al-Verbindung [mhm][a] | s-BuLi [mhm][a] | Temp. [°C] | Zeit [h] | M$_N$ [g/mol] | M$_N$/M$_W$ |
| Beispiel 2h | 10 mhm Et$_2$AlOEt | 5 | 120 | 1 | 19.000 | 1,17 |
| Beispiel 2i | 10 mhm iBu$_2$AlOEt | 5 | 120 | 1 | 18.600 | 1,14 |
| Beispiel 2j | 10 mhm DIBTBKA | 5 | 120 | 1 | 19.800 | 1,19 |
| (Vergleich) 2k | 10 mhm (iBu)$_3$Al | 5 | 120 | 1 | kein Umsatz | - |

a) mhm = mmol pro 100 g Styrol
b) DIBTBKA = Diisobutyl-(2,6-di-tert.butyl-4-methylphenoxy)aluminium

Tab. 5:

| Initiatormischungen aus Alkylaluminiumverbindung, Alkyllithiumverbindung und und einem Additiv. | | | | |
|---|---|---|---|---|
| | Versuch 1 | Versuch 2 | Versuch 3 | Versuch 4 |
| TIBA [mhm]* | 10 | 10 | 10 | 10 |
| Additiv | Ethanol | Butylamin | Dibutylamin | Dodecylsulfid |
| in [mhm]* | 4 | 4 | 4 | 4 |
| s-BuLi [mhm] * | 5 | 5 | 5 | 5 |
| Temp. [°C] | 120 | 120 | 120 | 120 |
| Zeit [h] | 1 | 0,5 | 0,5 | 1 |
| M$_N$ [g/mol] | 19.100 | 21.200 | 19.500 | 20.700 |
| M$_W$/M$_N$ | 1,20 | 1,10 | 1,13 | 1,17 |

* mhm = mmol pro 100 g Styrol

Die Versuche der Tabellen 2 - 5 zeigen unter anderem, daß mit den erfindungsgemäßen Initiatormischungen auch oberhalb eines Verhältnisses Al:Li = 1:1 kontrollierte Polymerisationen durchführbar sind.

Beispiel 3a

Zu 200 ml Cyclohexan wurden 1,2 ml einer sec.-Butyllithiumlösung (1,3 M in Cyclohexan) und 0,6 ml Styrol gegeben und für vier Stunden gerührt.
30 ml dieser Lösung wurden in einen 100 ml fassenden Kolben transferiert, der mit einer angeschmolzenen UV-Zelle ausgestattet war. Die Konzentration des Polystyryllithiums wurde UV-spektroskopisch zu [PS-Li] = 6,5 * 10$^{-3}$ M bestimmt. Zu dieser Lösung wurden 2,8 ml einer 0,06 M Lösung von Et$_2$AlOEt in Cyclohexan und anschließend 1,5 ml Styrol gegeben. Das molare Verhältnis Al/Li in der Lösung betrug r = 0,85. Die Abnahme der Styrolkonzentration in der Lösung wurde bei 100°C UV-spektroskopisch in der UV-Zelle verfolgt. Nach 70 Minuten war praktisch quantitativer Umsatz erreicht. Die Abnahme der Styrolkonzentration wurde nach einer Geschwindigkeitsgleichung erster Ordnung ausgewertet:

$$\ln([\text{Styrol}]_0/[\text{Styrol}]) = k_a * t$$

Aus der Konstante $k_a = 0{,}036$ $\text{min}^{-1}$ und [PS-Li] wurde die Reaktionsgeschwindigkeitskonstante $k_p = 0{,}45$ $\text{M}^{-0{,}5}$ $\text{min}^{-1}$ ermittelt. Das zahlenmittlere Molekulargewicht des Polystyrols der Endprobe betrug $M_N = 7200$ g/mol; die Uneinheitlichkeit betrug $M_W/M_N = 1{,}19$.

Unter gleichen Bedingungen wurde das Beispiel mit verschiedenen Al/Li-Verhältnissen wiederholt. Die Ergebnisse sind der Tabelle 6 zu entnehmen:

Tabelle 6:

| Beispiel | Al/Li | $k_p$ $\text{M}^{-0{,}5}$ $\text{min}^{-1}$ | $M_N$ g/mol | $M_W/M_N$ |
|---|---|---|---|---|
| 3a | 0,85 | 0,45 | 7200 | 1,19 |
| 3b | 2 | 0,013 | 7400 | 1,09 |
| 3c | 3 | $7{,}3 * 10^{-4}$ | 8100 | 1,03 |
| 3d | 5 | $6{,}5 * 10^{-4}$ | 7300 | 1,07 |
| 3e (Vergleich) | 0 | 18,5 | 7700 | 1,18 |
| 3f (Vergleich) | ∞ | keine Umsetzung | - | - |

Beispiel 4

Zu 30 ml der Lösung von Polystyryllithium aus Beispiel 3 ([PS-Li] = $6{,}5 * 10^{-3}$ M) wurden in einem 100 ml fassenden Kolben 6,5 ml einer 0,06 M Lösung von $Et_2AlOEt$ in Cyclohexan gegeben. Das molare Verhältnis Al/Li in der Lösung betrug r = 2. Die Lösung wurde 3 h bei 150°C gehalten. Anschließend wurden bei 100°C 10,7 ml Styrol zugegeben. Man erhielt nach 2 h quantitativ ein Polymerisat mit einem zahlenmittleren Molekulargewicht $M_N = 49.500$ g/mol und einer Uneinheitlichkeit $M_W/M_N = 1{,}17$.

Bei einer analogen Umsetzung ohne Zusatz des $Et_2AlOEt$ bildete sich in der Wärme eine blutrote Lösung, die eine Styrolpolymerisation nicht mehr zu initiieren vermochte.

Beispiel 5

Zu 200 ml Cyclohexan wurden 1,0 ml einer sec.-Butyllithiumlösung (1,3 M in Cyclohexan) und 1,4 ml Styrol gegeben und für vier Stunden gerührt. 30 ml dieser Lösung wurden in einen 100 ml fassenden Kolben, der mit einer angeschmolzenen UV-Zelle ausgestattet war, transferiert, mit der benötigten Menge Metallalkyl versetzt und bei der angegebenen Temperatur gelagert. Die Zersetzung der polymerisationsaktiven Spezies wurde anhand der Zeitabhängigkeit ihres UV-Signals für 5 - 10 Stunden verfolgt. Durch Zusatz von Styrol wurde am Ende des Experiments gezeigt, daß die mit den Aluminiumverbindungen versetzten Lösungen noch polymerisationsaktiv waren.

Tabelle 7

| Beispiel | Additiv | Al/Li | T | $I_{max}$ | $t_{1/2}$ [h]* |
|---|---|---|---|---|---|
| 5a (Vergleich) | - | 0 / 1 | 100°C | 327 nm | 3 h |
| 5b | $iBu_3Al$ | 0.85/ 1 | 100°C | 280 nm | 250 h |
| 5c | $Et_2AlOEt$ | 2 / 1 | 100°C | 283 nm | 300 h |

\* Halbwertszeit 1.Ordnung der Abnahme des UV-Signals

Beispiel 6

Beispiel 3 wurden mit Trimethylboroxin bzw. Phenyldioxaborinan anstelle von $Et_2AlOEt$ in Cyclohexan wiederholt. Für Trimethylboroxin wurde bei einem molaren Verhältnis $Me_3B_3O_3$/PS-Li = 0,3 eine Reaktionsgeschwindigkeitskonstante $k_p = 2{,}0$ $\text{M}^{-0{,}5}$ $\text{min}^{-1}$ ermittelt. Mit Phenyldioxaborinan wurde bei einem molaren Verhältnis B/Li = 0,4 eine Reaktionsgeschwindigkeitskonstante $k_p = 0{,}54$ $\text{M}^{-0{,}5}$ $\text{min}^{-1}$ ermittelt. Bei 50°C und dem gleichen Metallverhältnis betrug die Reaktionsgeschwindigkeitskonstante $k_p = 0{,}03$ $\text{M}^{-0{,}5}$ $\text{min}^{-1}$. Ohne Gegenwart der Borverbindung betrug die Reaktionsgeschwindigkeitskonstante bei 50°C kp = 1,6 $\text{M}^{-0{,}5}$ $\text{min}^{-1}$. Die Breite der Verteilung der Polymere betrug $M_W/M_N = 1{,}19$.

Beispiel 7

In Analogie zu Beispiel 3 wurde für Tri(isobutoxy)aluminium bei einem molaren Verhältnis Al(OiBu)$_3$/PS-Li = 0,8 und einer Temperatur von 50°C eine Reaktionsgeschwindigkeitskonstante kp = 0,08 M$^{-0,5}$ min$^{-1}$ ermittelt.

Beispiel 8

In Analogie zu Beispiel 3 wurde für Methylalumoxan (eingesetzt als 10%ige Lösung in Toluol) bei einem molaren Verhältnis MAO/PS-Li = 0,85 und einer Temperatur von 100°C eine Reaktionsgeschwindigkeitskonstante k$_p$ = 0,04 M$^{-0,5}$ min$^{-1}$ ermittelt. Bei einem molaren Verhältnis MAO/PS-Li = 2 und derselben Temperatur betrug die Reaktionsgeschwindigkeitskonstante k$_p$ = 0,01 M$^{-0,5}$ min$^{-1}$.

Beispiel 9

Für die kontinuierliche Polymerisation wurde ein doppelwandiger, 3-1 Rührkessel mit einem Standard-Ankerrührer verwendet. Der Reaktor war für einen Druck von 60 bar ausgelegt und mit einem Wärmeträgermedium für eine isotherme Polymerisationsführung temperiert. Die Initiatorkomponenten wurden über eine gemeinsame Zuleitung mit einem statischen Mischer dosiert. Die Zuleitung faßte 160 ml.
In dem Rührkessel wurden unter Rühren (80 Umdrehungen pro Minute) kontinuierlich 800 g/h Styrol und eine über die gemeinsame Zuleitung vorgemischte Initiatorlösung aus 2,05 g/h einer 1,6 molaren s-Butyllithiumlösung in Cyclohexan, 4,9 g/h einer 25 gew.%igen Lösung von Diisobutylaluminiumethoxid in Toluol und 180 ml/h Toluol (molares Verhältnis Li/Al = 1/2,2) dosiert und bei einer konstanten Massetemperatur von 110°C gerührt.
Der Austrag des Rührkessels wurde in zwei nacheinander geschaltete, jeweils gerührte und 4 Liter fassende Turmreaktoren weitergefördert. Der erste Turmreaktor wurde bei einer Innentemperatur von 113°C betrieben. Im zweiten Turmreaktor wurde über zwei gleich lange, nacheinander angeordnete Heizzonen die Temperatur so eingestellt, daß die Innentemperatur am Ende der ersten Zone 135°C, am Ende der zweiten Zone 165°C betrug. Am Austritt des Turmreaktors wurde die Polymerisationsmischung über einen Mischer mit 5 g/h n-Butanol versetzt, anschließend durch ein auf 260°C beheiztes Rohrstück geführt und über ein Druckregelventil in einen auf 25 mbar gehaltenen Vakuumtopf entspannt. Die Schmelze wurde mit einer Schnecke ausgetragen und granuliert.
Nach wenigen Stunden stellte sich ein stabiler Gleichgewichtszustand in allen Anlagenteilen ein. Der Druckabfall über die gesamte Anlage betrug 2,1 bar. Der Feststoffgehalt am Ausgang des Rührkessels betrug 15,2 Gew.-%, am Ausgang des ersten Turmreaktors 43,8 Gew.-%, am Ausgang des zweiten Turmreaktors 81 Gew.%, was einem 100%igen Monomerumsatz entspricht. Es wurde ein Polystyrol mit einem Molekulargewicht von Mw = 163.000 g/mol und eine Uneinheitlichkeit Mw/Mn von 2,68 erhalten. Die Verteilung war monomodal. Es wurde ein Gehalt von unter 10 ppm Styrol, unter 10 ppm Ethylbenzol und 98 ppm Toluol bestimmt.

Beispiel 10

Für die kontinuierliche Polymerisation wurde ein Doppelmantel-Rohrreaktor mit einem Innendurchmesser von 29,7 mm und einer Länge von 2100 mm verwendet. Der Rohrreaktor war für einen Druck von bis zu 100 bar und für eine Temperatur von bis zu 350°C ausgelegt. Der Rohrreaktor wurde über ein im Gleichstrom geführtes Wärmeträgermedium temperiert und die Temperatur der Polymerisationsmischung über drei gleichmäßig über die Reaktionsstrecke verteilte Thermofühlern bestimmt.
Über drei getrennte Pumpen wurden kontinuierlich 0,8 1/h Styrol, 0,16 1/h Ethylbenzol und 53,3 ml/h einer Initiatorlösung aus 3,3 ml einer einer 1,6 molaren s-Butyllithiumlösung in Cyclohexan, 10 ml einer 1,0 molaren Lösung von Diethylaluminiumethoxid in Toluol und 40 ml Ethylbenzol (molares Verhältnis Li/Al = 1/1,9) dem Rohrreaktor zugeführt. Die zudosierten Einsatzstoffe wurden jeweils auf 5°C gekühlt. Die Temperatur des Wärmeträgermediums betrug am Rohrreaktoreintritt 90°C. Die höchste Temperatur der Polymerisationslösung wurde am Ende des Rohrreaktor mit 194°C erreicht.
Nach Verlassen des Rohrreaktors wurde der Polymerisationsmischung eine 20 gew.-%igen Lösung von Methanol in Ethylbenzol mit 10 ml/h mittels einer HPLC-Pumpe zudosiert und in einem nachgeschalteten Rohrstück mit einem statischen Mischer homogenisiert. Die Polymerschmelze wird über ein Drosselventil in einen auf 20 mbar gehaltenen Entgasungstopf entspannt, mit einer Schneckenpumpe abgezogen, verstrangt und granuliert. Das erhaltene Polystyrol hatte ein Molekulargewicht M$_n$ von 131. 000 bei einer Uneinheitlichkeit M$_w$/M$_n$ von 1,37. Der Restgehalt an monomerem Styrol betrug weniger als 10 ppm.

**EP 1 056 790 B1**

**Patentansprüche**

1. Verfahren zur Homopolymerisation von vinylaromatischen Monomeren oder Copolymerisation von vinylaromatischen Monomeren und Dienen in Gegenwart von mindestens einer Alkalimetallverbindung und mindestens einer Verbindung eines Elementes der Gruppe 3a des Periodensystems, **dadurch gekennzeichnet, daß** die Verbindungen, jeweils bezogen auf die Summe der Moläquivalente von Alkalimetall und Elemente der Gruppe 3a,

   a) 0,1 bis 3,9 Moläquivalente Sauerstoff, Schwefel, Stickstoff oder Phosphor und

   b) 0,1 bis 3,9 Moläquivalente eines Organylliganden enthalten.

2. Verfahren nach Anspruch 1, **dadurch gekennzeichnet, daß** man als Alkalimetallverbindung ein Alkalimetallorganyl, -alkoholat, -thiolat oder -amid und als Verbindung eines Elementes der Gruppe 3a des Periodensystems ein Aluminium- oder Bprorganyl verwendet.

3. Verfahren nach den Ansprüchen 1 oder 2, **dadurch gekennzeichnet, daß** man als Alkalimetallverbindung ein Lithiumalkyl oder Lithiumalkoholat einsetzt.

4. Verfahren nach den Ansprüchen 1 bis 3, **dadurch gekennzeichnet, daß** man als Aluminiumverbindung ein Trialkylaluminium, Dialkylaluminiumalkoxylat, Dialkylaluminiumaryloxylat oder Alkylaluminoxan einsetzt.

5. Verfahren nach den Ansprüchen 1 bis 4, **dadurch gekennzeichnet, daß** man ein molares Verhältnis von Alkalimetall zu Element der Gruppe 3a des Periodensystems im Bereich von 0,002 bis 100 wählt.

6. Verfahren nach den Ansprüchen 1 bis 5, **dadurch gekennzeichnet, daß** man eine vorgemischte Initiatorzusammensetzung, enthaltend die Alkalimetallverbindung und die Verbindung eines Elementes der Gruppe 3a des Periodensystems, einsetzt.

7. Verfahren zur Homopolymerisation von styrol nach den Ansprüchen 1 bis 6.

8. Verfahren nach den Ansprüchen 1 bis 7, **dadurch gekennzeichnet, daß** man bei einer anfänglichen Monomerenkonzentration im Bereich von 50 bis 100 Volumenprozent polymerisiert.

9. Verfahren nach den Ansprüchen 1 bis 8, **dadurch gekennzeichnet, daß** man die Polymerisation kontinuierlich durchführt.

10. Verfahren nach den Ansprüchen 1 bis 9, **dadurch gekennzeichnet, daß** man mindestens einen Teil des Umsatzes in einem nicht rückvermischenden Reaktor oder Reaktorabschnitt durchführt.

**Claims**

1. A process for the homopolymerization of vinylaromatic monomers or the copolymerization of vinylaromatic monomers and dienes in the presence of at least one alkali metal compound and at least one compound of an element of group 3a of the Periodic Table of the Elements, which comprises using compounds containing, based on the sum of molar equivalents of alkali metal and elements of group 3a, in each case

   a) from 0.1 to 3.9 molar equivalents of oxygen, sulfur, nitrogen or phosphorus and

   b) from 0.1 to 3.9 molar equivalents of an organyl ligand.

2. A process as claimed in claim 1, wherein the alkali metal compound used is an alkali metal organyl, alkali metal alkoxide, alkali metal thiolate or alkali metal amide and the compound of an element of group 3a of the Periodic Table of the Elements is an aluminum or boron organyl.

3. A process as claimed in claim 1 or 2, wherein the alkali metal compound used is a lithium alkyl or lithium alkoxide.

4. A process as claimed in any of claims 1 to 3, wherein the aluminum compound used is a trialkylaluminum, dialkylaluminum alkoxide, dialkylaluminum aryloxylate or alkylaluminoxane.

5. A process as claimed in any of claims 1 to 4, wherein the molar ratio of alkali metal and element of group 3a of the Periodic Table of the Elements is in the range from 0.002 to 100.

6. A process as claimed in any of claims 1 to 5, wherein a premixed initiator composition comprising the alkali metal compound and the compound of an element of group 3a of the Periodic Table of the elements is used.

7. A process for the homopolymerization of styrene as claimed in any of claims 1 to 6.

8. A process as claimed in any of claims 1 to 7, wherein the polymerization is carried out at an initial monomer concentration in the range from 50 to 100 percent by volume.

9. A process as claimed in any of claims 1 to 8, wherein the polymerization is carried out continuously.

10. A process as claimed in any of claims 1 to 9, wherein at least a part of the conversion is carried out in a non-backmixing reactor or reactor section.

**Revendications**

1. Procédé d'homopolymérisation de monomères vinylaromatiques ou de copolymérisation de monomères vinylaromatiques et de diènes en présence d'au moins un composé de métal alcalin et d'au moins un composé d'un élément du groupe 3a du système périodique, **caractérisé en ce que** les composés contiennent, à chaque fois par rapport à la somme des équivalents molaires de métal alcalin et d'éléments du groupe 3a,

   a) de 0,1 à 3,9 équivalents molaires d'oxygène, de soufre, d'azote ou de phosphore et
   b) de 0,1 à 3,9 équivalents molaires d'un ligand organyle.

2. Procédé selon la revendication 1, **caractérisé en ce que** l'on utilise comme composé de métal alcalin un organyle, alcoolate, thiolate ou amide de métal alcalin, et comme composé d'un élément du groupe 3a du système périodique, un organyle d'aluminium ou de bore.

3. Procédé selon la revendication 1 ou 2, **caractérisé en ce que** l'on met en oeuvre, comme composé de métal alcalin, un alkyllithium ou un alcoolate de lithium.

4. Procédé selon les revendications 1 à 3, **caractérisé en ce que** l'on met en oeuvre comme composé d'aluminium un trialkylaluminium, un alcoxylate de dialkylaluminium, un aryloxylate de dialkylaluminium ou un alkylaluminoxane.

5. Procédé selon les revendications 1 à 4, **caractérisé en ce que** l'on choisit une proportion molaire de métal alcalin à l'élément du groupe 3a du système périodique de l'ordre de 0,002 à 100.

6. Procédé selon les revendications 1 à 5, **caractérisé en ce que** l'on met en oeuvre une composition d'initiateur prémélangée, contenant le composé de métal alcalin et le composé d'un élément du groupe 3a du système périodique.

7. Procédé d'homopolymérisation de styrène selon les revendications 1 à 6.

8. Procédé selon les revendications 1 à 7, **caractérisé en ce que** l'on polymérise à une concentration de départ des monomères de l'ordre de 50 à 100 % en volume.

9. Procédé selon les revendications 1 à 8, **caractérisé en ce que** l'on entreprend la polymérisation en continu.

10. Procédé selon les revendications 1 à 9, caractérisé en ce l'on entreprend au moins une partie de la conversion dans un réacteur ou dans une section de réacteur sans remélange.